# EUROPÄISCHE PATENTSCHRIFT

(11) **EP 1 533 153 B1**
(45) Veröffentlichungstag und Bekanntmachung des Hinweises auf die Patenterteilung: **10.09.2008**
(21) Anmeldenummer: 03292912.7
(22) Anmeldetag: 21.11.2003
(51) Int. Cl.: B60H 1/00

(54) **Verstellbare Luftleiteinrichtung, insbesondere fur einen Luftverteiler einer Fahrzeugklimaanlage**
Adjustable air conduit means, in particular for an air distributor of a vehicle air conditioner
Dispositif réglabe de conduit d'air, en particulier pour un distributeur d'air d'une installation de climatisation de véhicule

(43) Veröffentlichungstag der Anmeldung: 25.05.2005
(73) Patentinhaber: Behr France Rouffach SAS, 68250 Rouffach (FR)
(72) Erfinder: Peter, Vincent, 68190, Ensisheim (FR)
(74) Vertreter: Grauel, Andreas

(56) Entgegenhaltungen:
- EP-A- 1 334 849
- DE-A- 2 455 339
- US-A- 4 216 822
- US-A- 5 070 770

## Beschreibung

Die vorliegende Erfindung betrifft eine verstellbare Luftleiteinrichtung, insbesondere für einen Luftverteiler einer Fahrzeugklimaanlage mit den Merkmalen des Oberbegriffs des Patentanspruchs 1.

Fahrzeugklimaanlagen weisen üblicherweise einen Luftführungskanal mit darin angeordnetem Wärmetauscher und einer diesem nachgeordneten Heizeinrichtung auf. Eine verstellbare Luftleiteinrichtung dient zur Warmluftsteuerung. Die aus dem Wärmetauscher austretende gekühlte Luft kann variabel zwischen einem Zweigkanal mit der darin angeordneten Heizeinrichtung und einem zu diesem Zweigkanal parallelen Bypasskanal verteilt werden. Je nach der Menge der durch den Zweigkanal beziehungsweise durch den Bypasskanal strömenden Luft wird die Temperatur der ausströmenden Luft reguliert. Als derartige Luftleit- bzw. Verstelleinrichtungen sind eine Reihe von Klappensystemen bekannt, beispielsweise Trommelklappen mit einer senkrecht zur Längsrichtung des Luftführungskanals angeordneten Schwenkachse. Auch unterschiedliche Verschiebe oder Rollklappen sind bekannt.

Die bekannten Verstellsysteme weisen eine Einbaugröße und einen Platzbedarf auf, der zu einem relativ großen Abstand zwischen Wärmetauscher und Heizeinrichtung führt. Das gesamte Bauvolumen der Klimaanlage nimmt dadurch zu.

Aus der US 5,070,770 ist eine Heizungs- und Klimaanlage mit einer verstellbaren Klappe zwischen Verdampfer und Heizkörper bekannt, die eine kreisförmige Kontur aufweist.

Eine Aufgabe der vorliegenden Erfindung besteht darin, eine verstellbare Luftleiteinrichtung für einen Luftführungskanal zur Verfügung zu stellen, die einen geringen Platzbedarf und eine gute Steuerbarkeit aufweist.

Diese Aufgabe wird mit dem Gegenstand des unabhängigen Patentanspruchs gelöst. Merkmale vorteilhafter Weiterbildungen ergeben sich aus abhängigen Ansprüchen.

Eine verstellbare Luftleiteinrichtung, die insbesondere für einen Luftverteiler einer Fahrzeugklimaanlage geeignet ist, umfasst eine innerhalb eines Luftführungskanals angeordnete schwenkbare flache Klappe zum zumindest teilweisen Versperren oder Öffnen eines Teilquerschnitts der Luftführungskanals. Erfindungsgemäß ist eine Schwenkachse der Klappe in etwa parallel zur Längserstreckungsrichtung des Luftführungskanals angeordnet. Die Schwenkachse ist ungefähr mittig im Kanalquerschnitt angeordnet. Eine Oberfläche der flachen Klappe ist vorzugsweise parallel zu einem senkrechten Kanalquerschnitt angeordnet. Die Klappe weist eine in etwa halbkreisförmige Kontur auf, die vorzugsweise an eine Kontur des Luftführungskanals angepasst ist. Ihre gerade Basisseite ist ungefähr mittig an der Schwenkachse befestigt. Gegebenenfalls kann die Klappe auch mehrere Segmente aufweisen, die regelmäßig aufeinander folgend angeordnet sind, so dass bei einem Verschwenken der Klappe die unterschiedlichen Luftwege versperrt oder freigegeben werden können.

Bei einer Anordnung der Klappe zwischen einem Wärmetauscher und einer Heizeinrichtung der Fahrzeugklimaanlage können diese in sehr geringem Abstand zueinander angeordnet sein, da die Klappe aufgrund ihrer flachen Bauweise nur einen minimalen Einbauraum benötigt. In einer ersten Anschlagstellung verschließt die Klappe einen Zweigkanal des Luftführungskanals mit der darin angeordneten Heizeinrichtung und lässt einen zum Zweigkanal parallelen Bypasskanal offen. In einer zweiten Anschlagstellung verschließt die Klappe den Bypasskanal und lässt den Zweigkanal offen. In einer beliebigen Zwischenstellung kann die Temperatur der aus dem Wärmetauscher kommenden gekühlten Luft durch eine variable Öffnung des Kanalquerschnitts reguliert werden.

Die Schwenkachse kann insbesondere mittels eines elektrischen Stellmotors verdrehbar sein, beispielsweise mittels eines Schrittmotors. Gegebenenfalls kann auch ein Getriebe zwischen dem Stellmotor und der Schwenkachse vorgesehen sein.

Die Erfindung wird nachfolgend anhand eines bevorzugten Ausführungsbeispielen unter Bezugnahme auf die beiliegenden Figuren näher erläutert. Dabei zeigt:
- Figur 1: einen schematischen Querschnitt eines Luftverteilers einer Fahrzeugklimaanlage mit einer darin angeordneten verstellbaren Luftleiteinrichtung.
- Figur 2: eine Prinzipdarstellung einer Klappenanordnung der Luftleiteinrichtung in einer ersten Anschlagstellung der Klappe,
- Figur 3: eine Prinzipdarstellung entsprechend Figur 2 in einer zweiten Anschlagstellung der Klappe und
- Figur 4: zwei schematische Ansichten der Klappe.

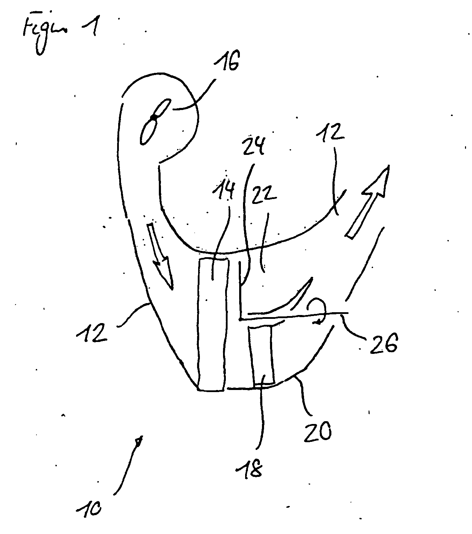

Figur 1 verdeutlicht in einer schematischen Schnittdarstellung einen Luftverteiler 10 einer Fahrzeugklimaanlage, in dessen Luftführungskanal 12 ein Wärmetauscher 14 zum Abkühlen von mittels einer Ventilationseinrichtung 16 geförderten Luft angeordnet ist. Stromabwärts des Wärmetauschers 14 ist eine Heizeinrichtung 18 vorgesehen, die in einem Zweigkanal 20 angeordnet ist. Parallel zum Zweigkanal verläuft ein Bypasskanal 22, der der Kaltluftführung dient. Zweigkanal 20 und Bypasskanal 22 werden weiter stromabwärts wieder zum gemeinsamen Luftführungskanal 12 zusammengeführt. Die hierin geförderte Luft wird zu verschiedenen Ausströmöffnungen (nicht dargestellt) im Fahrzeuginnenraum gefördert, beispielsweise in einem Fußraum, einen mittleren Bereich des Innenraums sowie einen scheibennahen Bereich.

Zwischen Heizeinrichtung 18 und Wärmetauscher 14 ist eine erfindungsgemäße verstellbaren Luftleiteinrichtung in Form einer Klappe 24 angeordnet, die um eine Schwenkachse 26 verschwenkt werden kann und wahlweise einen Teil des Zweigkanals 20 verschließt und des Bypasskanals 22 öffnet beziehungsweise umgekehrt. Es ist hierbei deutlich erkennbar, dass der Wärmetauscher 14 und die Heizeinrichtung 18 in sehr geringem Abstand zueinander angeordnet sind, so dass sehr kompakte Luftverteiler und Klimaanlagen aufgebaut werden können.

Die Klappe 24 weist eine halbkreisförmige Kontur auf, wie anhand der folgenden Figuren verdeutlicht wird. Die Schwenkachse 26 ist auf Höhe der Klappe 24 in etwa parallel zu einer Längserstreckungsrichtung des Luftführungskanals 12 angeordnet und befindet sich vorzugsweise in einem Bereich zwischen Zweigkanal 20 und Bypasskanal 22.

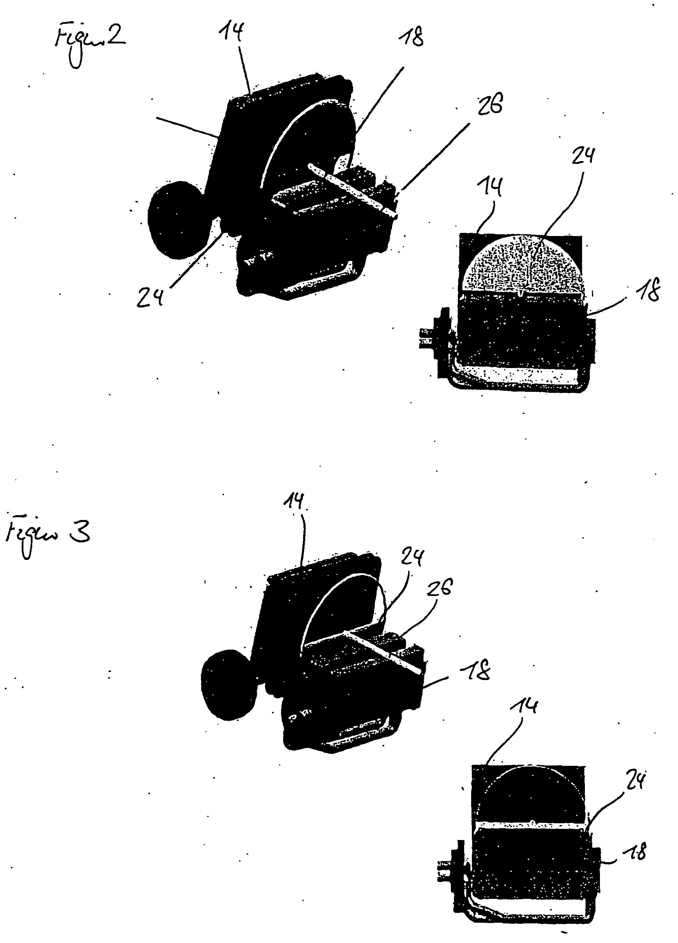

Die Figuren 2 und 3 verdeutlichen die unterschiedlichen Stellungen der verschwenkbaren Klappe 24. Figur 2 illustriert in zwei Ansichten eine erste Anschlagstellung der Luftleiteinrichtung, bei der die halbkreisförmige Klappe 24 den Bypasskanal 22 weitgehend verschließt, so dass die klimatisierte Luft weitgehend durch den Zweigkanal 20 mit der darin angeordneten Heizeinrichtung 18 strömen muss.

Durch Verdrehen der Schwenkachse 26 um einen Winkel von 180 Grad wird eine zweite Anschlagstellung erreicht, welche anhand der Figur 3 verdeutlicht ist. Hierbei ist der Zweigkanal 20 unmittelbar vor der Heizeinrichtung 18 versperrt und gleichzeitig der Bypasskanal 22 freigegeben, so dass weitgehend die gesamte Luftströmung durch den Bypasskanal 22 verläuft.

In einer beliebigen Zwischenstellung ist ein Teil des Bypasskanals 22 geöffnet und ein Teil des Zweigkanals 20 ebenfalls offen, so dass auf diese Weise eine Temperaturregulierung der gekühlten Luft ermöglicht ist.

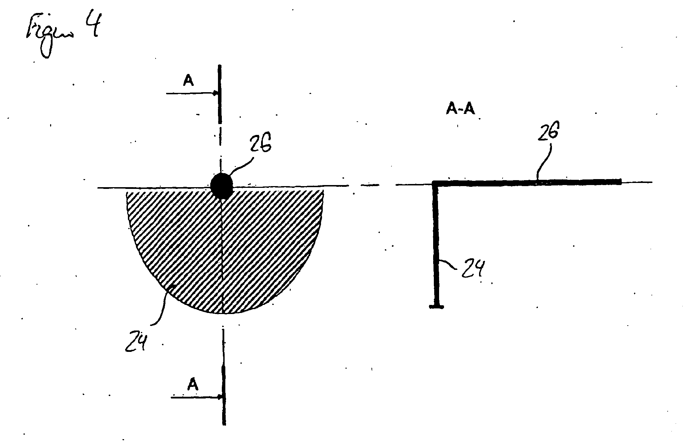

Figur 4 verdeutlicht in zwei Ansichten die Kontur und Anordnung der halbkreisförmigen Klappe 24, die mittels der Schwenkachse 26 verschwenkt werden kann. Die Draufsicht der linken Seite verdeutlicht die halbkreisförmige Kontur der Klappe 24, während die Schnittdarstellung entlang der Schnittlinie A-A der rechten Seite die Anordnung der Schwenkachse 26 und die Verbindung der Klappe 24 mit dem freien Ende der Schwenkachse 26 verdeutlicht.

Die erfindungsgemäße Luftleiteinrichtung funktioniert somit in Art einer Blende, welche den Bypasskanal 22 und den Zweigkanal 20 je nach Winkelstellung mehr oder weniger freigibt bzw. verschließt.

## Patentansprüche

1. Verstellbare Luftleiteinrichtung, mit einem Luftführungskanal (12), Wärmetauscher (14) und Heizeinrichtung (18), für einen Luftverteiler einer Fahrzeugklimaanlage, mit einer innerhalb des Luftführungskanals (12) angeordneten schwenkbaren flachen Klappe (24) zum zumindest teilweisen Versperren oder Öffnen eines Teilquerschnitts des Luftführungskanals (12), wobei die Klappe (24) eine in etwa halbkreisförmige Kontur hat, an deren gerader Basisseite der Klappe (24) ungefähr mittig die Schwenkachse (26) befestigt ist, wobei die Klappe zwischen einem Wärmetauscher (14) und einer Heizeinrichtung (18) der Fahrzeugklimaanlage angeordnet ist und die Schwenkachse (26) in etwa parallel zur Längserstreckungsrichtung des Luftführungskanals (12) ist, **dadurch gekennzeichnet, dass** eine Oberfläche der flachen Klappe (24) parallel zu einem senkrechten Kanalquerschnitt und in etwa parallel zum Wärmetauscher (14) und zur Heizeinrichtung (18) angeordnet ist.

2. Luftleiteinrichtung nach Anspruch 1, **dadurch gekennzeichnet, dass** die Schwenkachse (26) ungefähr mittig im Kanalquerschnitt angeordnet ist.

3. Luftleiteinrichtung nach einem der voranstehenden Ansprüche, **dadurch gekennzeichnet, dass** die Klappe (24) wenigstens zwei Segmente aufweist, die gegenüber liegend angeordnet sind.

4. Luftleiteinrichtung nach einem der voranstehenden Ansprüche, **dadurch gekennzeichnet, dass** die Klappe (24) in einer ersten Anschlagstellung einen Zweigkanal (20) des Luftführungskanal (12) mit der darin angeordneten Heizeinrichtung (18) verschließt und einen zum Zweigkanal (20) parallelen Bypasskanal (22) offen lässt.

5. Luftleiteinrichtung nach einem der voranstehenden Ansprüche, **dadurch gekennzeichnet, dass** die Klappe (24) in einer zweiten Anschlagstellung den Bypasskanal (22) verschließt und den Zweigkanal (20) offen lässt.

6. Luftleiteinrichtung nach einem der voranstehenden Ansprüche, **dadurch gekennzeichnet, dass** die Schwenkachse (26) mittels eines elektrischen Stellmotors verdrehbar ist.

## Claims

1. Adjustable air conduit means comprising an air duct (12), a heat exchanger (14) and a heater (18) for an air distributor of a vehicle air conditioning system, with a pivotable flat damper (24) located within the air duct (12) for at least partially blocking or opening a part of the cross-section of the air duct (12), wherein the damper (24) has an approximately semicircular contour with the pivot axis (26) being secured to the base side of the damper (24) approximately in the centre, wherein the damper is disposed between a heat exchanger (14) and a heater (18) of the vehicle air conditioning system and the pivot axis (26) is approximately parallel to the longitudinal direction of the air duct (12), **characterised in that** a surface of the flat damper (24) is arranged parallel to a vertical duct cross-section and approximately parallel to the heat exchanger (14) and the heater (18).

2. Air conduit according to claim 1, **characterised in that** the pivot axis (26) is disposed approximately in the centre of the duct cross-section.

3. Air conduit according to any of the preceding claims, **characterised in that** the damper (24) comprises at least two segments which are arranged opposite one another.

4. Air conduit according to any of the preceding claims, **characterised in that** the damper (24) blocks a branch passage (20) of the air duct (12) with the heater (18) located therein in a first stop position while leaving a bypass passage (22) extending parallel to the branch passage (20) open.

5. Air conduit according to any of the preceding claims, **characterised in that** the damper (24) blocks the bypass passage (22) in a second stop position while leaving the branch passage 20 open.

6. Air conduit according to any of the preceding claims, **characterised in that** the pivot axis (26) is adjustable by means of an electric servomotor.

## Revendications

1. Dispositif déflecteur d'air réglable comprenant un conduit de passage d'air (12), un échangeur de chaleur (14) et un dispositif de chauffage (18), prévu pour un répartiteur d'air d'un système de climatisation d'un véhicule, comprenant un volet plat pivotant (24) disposé à l'intérieur du conduit de passage d'air (12) et servant au moins à la fermeture ou à l'ouverture, partielle, d'une section partielle du conduit de passage d'air (12), où le volet (24) a un contour à peu près en forme de demi-cercle, l'axe de pivotement (26) étant fixé sur le côté rectiligne de la base du volet (24), à peu près au milieu, où le volet est disposé entre un échangeur de chaleur (14) et un dispositif de chauffage (18) du système de climatisation du véhicule, et l'axe de pivotement (26) est à peu près parallèle à la direction de l'étendue longitudinale du conduit de passage d'air (12),
**caractérisé en ce qu'**une surface du volet plat (24) est disposée parallèlement à une section verticale du conduit et à peu près parallèlement à l'échangeur de chaleur (14) et au dispositif de chauffage (18).

2. Dispositif déflecteur d'air selon la revendication 1, **caractérisé en ce que** l'axe de pivotement (26) est disposé à peu près au milieu dans la section du conduit.

3. Dispositif déflecteur d'air selon l'une ou l'autre des revendications précédentes, **caractérisé en ce que** le volet (24) présente au moins deux segments qui sont disposés l'un en face de l'autre.

4. Dispositif déflecteur d'air selon l'une quelconque des revendications précédentes, **caractérisé en ce que** le volet (24), dans une première position de butée, ferme un conduit secondaire (20) du conduit de passage d'air (12), le dispositif de chauffage (18) étant disposé à l'intérieur de ce conduit secondaire, et laisse ouvert un conduit de dérivation (22) parallèle au conduit secondaire (20).

5. Dispositif déflecteur d'air selon l'une quelconque des revendications précédentes, **caractérisé en ce que** le volet (24), dans une deuxième position de butée, ferme le conduit de dérivation (22) et laisse ouvert le conduit secondaire (20).

6. Dispositif déflecteur d'air selon l'une quelconque des revendications précédentes, **caractérisé en ce que** l'axe de pivotement (26) peut tourner au moyen d'un servomoteur électrique.
